# EUROPEAN PATENT SPECIFICATION

(11) **EP 3 526 410 B1**
(45) Date of publication and mention of the grant of the patent: **19.08.2020**
(21) Application number: 17795066.4
(22) Date of filing: 12.10.2017
(51) Int. Cl.: E02B 3/06, E02D 17/18, E02B 3/10

(54) **ARTIFICIAL BREAKWATER REEF AND RELATED MANUFACTURING METHOD**
KÜNSTLICHES WELLENBRECHERRIFF UND ZUGEHÖRIGES HERSTELLUNGSVERFAHREN
RÉCIF BRISE-LAME ARTIFICIEL ET PROCÉDÉ DE FABRICATION ASSOCIÉ

(30) Priority: 14.10.2016 IT 201600103361
(43) Date of publication of application: 21.08.2019
(73) Proprietor: S.I.L.E.M. Srl, 89018 Villa San Giovanni (RC) (IT)
(72) Inventor: ARENA, Domenico, 89018 Villa San Giovanni (RC) (IT)
(74) Representative: Scorza, Federica
(86) International application number: PCT/IB2017/056306
(87) International publication number: WO 2018/069856

(56) References cited:
- WO-A1-2006/114547
- WO-A1-2015/110725
- DE-A1-102008 020 261
- US-A- 4 521 131

## Description

The present invention relates to an artificial breakwater reef.

The present invention also relates to a method for manufacturing an artificial breakwater reef.

In particular, the present invention relates to an artificial breakwater reef, of the monobloc type that can be positioned close and/or distant from the coast to reduce the energy of the wave motion, and to the relative manufacturing method.

As it is known, different types of artificial breakwater reefs exist.

Artificial breakwater reefs consist of works built in order to protect coastal and marine erosion to protect the territory.

The artificial breakwater reefs are works for coastal protection, classified into: covers and supports of the ground (defenses members as bulkheads at sea, flood walls, paneling); transversal works (panels) and detached parallel works (cliffs, barriers, etc.).

The breakwater barriers can also be of two main types depending on the crest elevation with respect to the average sea level. The barriers are defined, in fact, as emerging or submerged.

Whatever the type of breakwater barrier is deemed appropriate based on design considerations, it is currently made with mantellate of loose materials, natural or artificial rocks boulders, having high degrees of vacuum to reduce the energy and the wave ski.

Barriers are among the most common works for the protection of coasts affected by erosive phenomena of various typologies and entities, and are generally realizable in relatively short and cost-effective times. This type of solution guarantees good results over the short-term period, with regard to the protection of the beach line and sometimes they trigger erosion processes upstream or downstream.

A known artificial breakwater is disclosed by WO2006/114547A1 and, in particular, an elongated device consisting of at least one tube comprising a water-permeable inner tubular casing for retaining a filler material and to the production method of said device. The device also comprises an outer lattice-forming casing (net, grille, mesh, etc.) which surrounds the inner casing. The device is suitable for a dike, a quay, a jetty, a breakwater, a groin, an artificial reef or a bank reinforcement.

Also, the patent application US4521131A describes a lightweight semi-flexible dike and a method of installing an erosion-preventing lightweight, semi-permeable, semi-flexible structure in the form of a dike for erosion control of a bank along a body of water. The method comprises the excavation of hydraulically placed silty or clay-containing sand fill or existing silty or clay-containing beach sands to form a trench and the placing of a synthetic woven fabric at the base of the excavation. A mixture of shell, sand and cement is then formed and placed in the excavated trench and compacted therein in layers to construct a dike. After covering the dike with a porous synthetic fabric, rock-filled gabions are then placed on the water-side face and crest of the dike.

Another example of artificial breakwater is described in WO2015/110725A1 that in particular descries a reinforced stabilisation strip for reinforced embankment structures, comprising long reinforcing fibres and a longitudinal casing surrounding or enclosing the long reinforcing fibres, the casing at least partially consisting of a functionalised polymer material comprising a functionalised polyolefin. The invention also relates to a reinforced embankment structure comprising such a stabilisation strip.

Finally, DE102008020261A1 describes a flood water and coastal protection device, having a fastening unit fixing set of elastic plates in position to be protected, where plates with thickness of specified range consist of rubber and inserts that are made up of textile fabrics.

However, known artificial breakwater barriers may be aesthetically unpleasant and unpleasant for bathers, especially if they are emerging and made with large concrete boulders.

The use of natural stones, compared with artificial boulders, has the advantage of less environmental impact and preserves the naturalness of the landscape. However, the natural rocks are collected from quarries, which may not be available nearby, and also sometimes have a specific weight and size not optimal for the purpose of the breakwaters design.

In addition, the known artificial breakwater reefs have stability problems. In fact, the natural or artificial elements used for the formation of the protective cabinet, if correctly dimensioned with respect to the stresses to which they are subjected, complain about the sinking phenomenon in the ground laying.

In addition, the method for manufacturing artificial breakwater reefs provide for a periodic maintenance to ensure the stability of the barrier itself and not allow to use waste material to constructive purposes.

An object of the present invention is to provide an artificial breakwater reef and a related manufacturing method which are efficient and resistant, and with low environmental impact, therefore having characteristics such as to overcome the limitations that still affect the artificial breakwater reefs and the related manufacturing methods, with reference to the prior art.

A further object of the present invention is to provide a method for manufacturing an artificial breakwater reef which is simple, economical and ecologic and which also permits the use of waste materials.

According to the present invention, an artificial breakwater reef is provided, as defined in claim 1.

According to the present invention, a method for manufacturing an artificial breakwater reef, as defined in claim 4.

For a better understanding of the present invention it is now described a preferred embodiment, purely by way of non-limiting example, with reference to the accompanying drawings, in which:

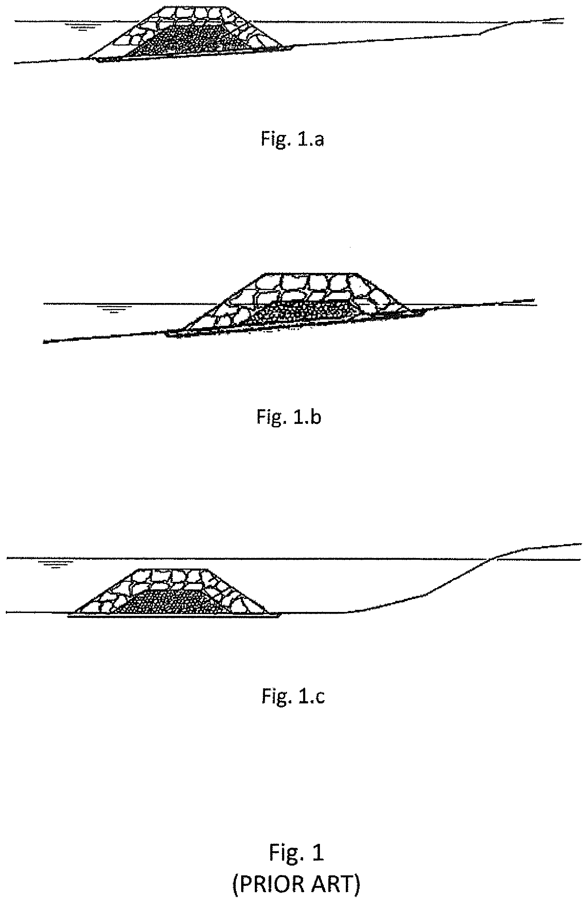

- Figure 1 shows a schematic view of artificial breakwater reefs, with reference to the prior art;
- Figure 2 shows a detailed schematic view of the artificial breakwater reef, according to the invention;
- Figure 3 shows schemes of possible configurations of the artificial breakwater reef, according to the invention;
- Figure 4 shows a diagram of a method for manufacturing the artificial breakwater reef, according to the invention.

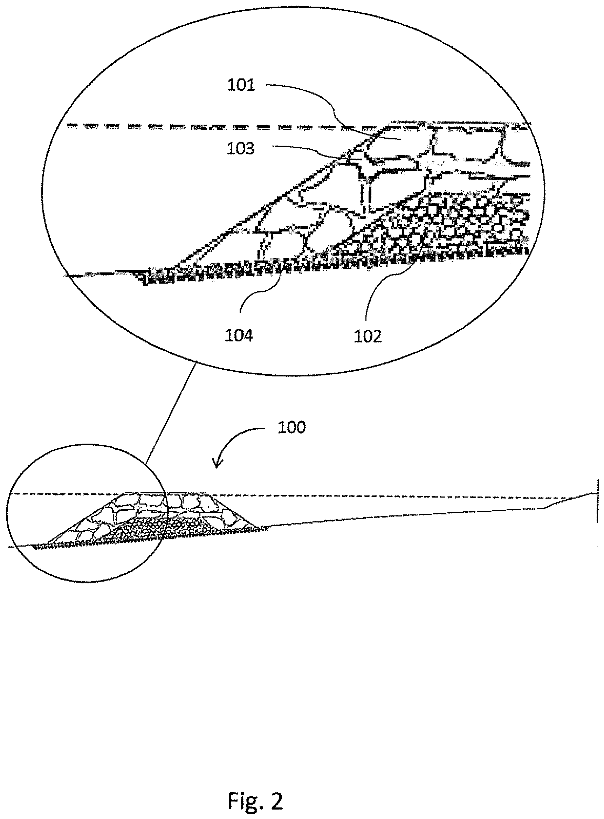

With reference to these figures and, in particular, to the figure 2, an artificial breakwater reef is shown, according to the invention.

More in details, the artificial breakwater reef 100 comprises: a plurality of natural stones 101, a tout-venant core 102, a foundation bench 104, and an artificial matrix 103.

According to the invention, the artificial matrix 103 is constituted by an overwrap made of a permeable and biodegradable material. Such aggregating mixture comprises a hydraulic binder suitable to solidify rapidly in seawater, and an aggregate.

Advantageously, the artificial matrix allows to aggregate and consolidate the individual blocks of natural stones in a single monoblock barrier.

Advantageously, the artificial matrix gives the breaker barrier according to the invention a natural appearance and at the same time strength and optimized stability.

Advantageously according to the invention the aggregating mixture is such as to quickly solidify in seawater.

According to a preferred embodiment of the invention the aggregate is composed of sand, gravel and stone, or those quarry residues obtained from the extraction of natural and classified reusable stones.

Advantageously, the use of aggregate consisting of quarry residues favors the attainment, by the artificial matrix 103, of the same color of natural stones 101, thereby minimizing the environmental impact of the barrier 100.

According to the invention, the aggregate mixture can be added with dyes.

Advantageously according to the invention, the additivation with dyes allows to make the coloring of the barrier 100 homogeneous.

Also according to the invention, the aggregate or a percentage of it, is made up of inorganic solid waste classified as non-toxic.

Advantageously, the use of solid waste as building material in the construction of the breakwater reef allows for recycling of waste, reducing costs and safeguarding the environment.

According to an aspect of the invention, the barrier 100 is built on a foundation bench made of stone and one layer below consisting of a geotextile 104.

The geotextile 104 is a three-dimensional net in a non-woven fabric having characteristics such as to be permeable to water and retain materials which are closely in contact.

Advantageously according to the present disclosure, laying the geotextile 104 is maintained even in the laying method according to the present disclosure as stabilizes the structure of the overlying reef 100.

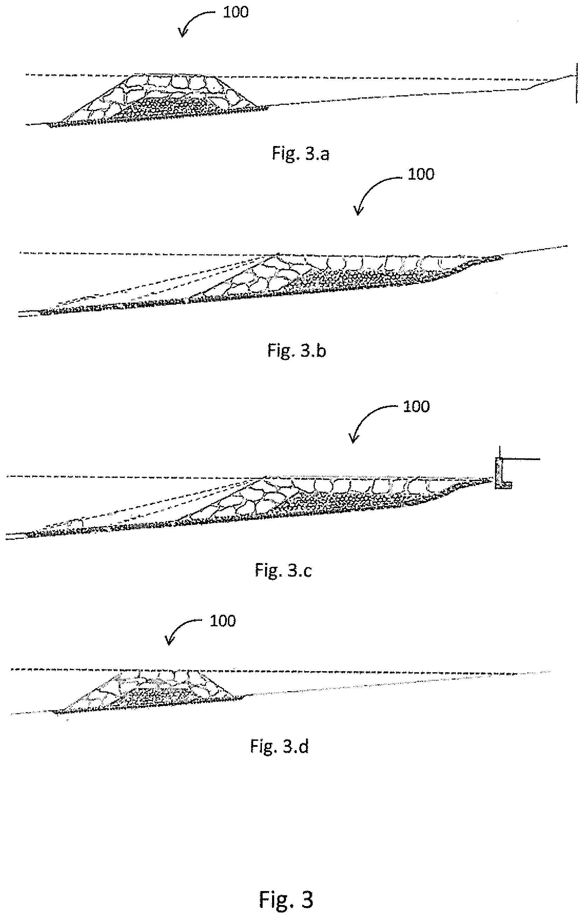

In Figure 3, different configurations of the reef 100 relative to the coast are shown.

In particular, the Figure 3.a shows a reef parallel to the shoreline, the Figure 3.b shows a grazing defense barrier beach, Figure 3.c shows a grazing defense barrier wall, the figure 3.d shows a barrier spaced from the shore to form an islet.

The size of each reef relative to the width of berm (upper surface); slope of the exterior and interior shoes; thickness of the foundation bench; thickness and weight of the foundation geotextile; core thickness; and thickness of mantellate are variables and are obtained by means of a suitable calculation suitable to verify the required surface to the wave dissipation.

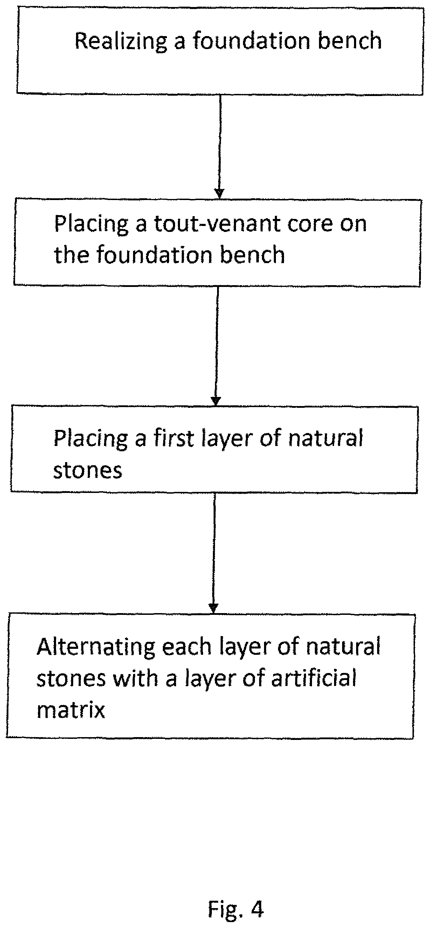

As shown in FIG 4, the method of making an artificial breakwater reef according to the present invention, as defined by claim 4, comprises the following steps:
- realizing a foundation bench;
- placing a tout-venant core on the foundation bench;
- placing a first layer of natural stones on the foundation bench and on the tout-venant core;
- alternating each layer of natural stones with a layer of artificial matrix minimizing empty spaces, to form a substantially trapezoidal structure of dimensions specified in the design phase.

Advantageously according to the present disclosure, the arrangement of the aggregating mixture in a biodegradable wrapper makes easier and quicker the laying operations of artificial matrix layers and at the same time does not obstruct the outlet, and the hardening of the binder.

Advantageously minimizing voids during laying stabilizes the breakwater barrier.

Advantageously the artificial breakwater reef according to the invention allows to reduce the incident wave, thus reducing the energy, due to its roughness and not, as it occurs in the known barriers, increasing the degree of vacuum through the voids in which the wave collapses.

In addition, the artificial breakwater reef according to the invention allows the use of recycled materials, reducing costs in an environmentally friendly way.

Therefore, the artificial breakwater reef according to the invention makes it possible to effectively mitigate the erosive phenomena reducing the environmental impact.

Another advantage of the artificial breakwater reef according to the invention is more stable compared to those of the prior art.

A further advantage of the artificial breakwater reef according to the invention consists in the fact of being optimizable in the design phase, in terms of specific dimensions and weight both of the single element (rock) that the artefact in its entirety.

Finally it is clear that the artificial breakwater reef here described and illustrated may be subject to modifications and variations without thereby departing from the scope of the present invention, as defined in the appended claims.

## Claims

1. Artificial breakwater reef (100) comprising:
- At least a foundation bench (104);
- At least one tout-venant core (102) placed on the foundation bench (104) comprising gravel and a geotextile substrate;
- A plurality of natural stones (101) placed on the tout-venant core (102); and
- At least one artificial matrix (103) alternated to layers of the natural stones (101);
wherein the artificial matrix (103) comprises an overwrap made of a permeable and biodegradable material, containing an aggregating mixture comprising at least a hydraulic binder, configured to solidify rapidly in seawater, **characterised in that** the aggregating mixture is added with dyes, and comprises inorganic solid waste classified as non-toxic.

2. Artificial breakwater reef (100) according to claim 1, **characterized in that** the aggregate comprises sand, gravel and stones.

3. Artificial breakwater reef (100) according to claim 1, **characterized in that** the geotextile substrate is a three-dimensional net in a water permeable non-woven fabric.

4. A method of making the artificial breakwater reef (100) according to claim 1, **characterized by** comprising the steps of:
- realizing a foundation bench;
- placing a tout-venant core on the foundation bench;
- placing a first layer of natural stones on the foundation bench and on the tout-venant core;
- alternating each layer of natural stones with a layer of artificial matrix minimizing empty spaces, to form a substantially trapezoidal structure of dimensions specified in the design phase.

## Patentansprüche

1. Künstliches Wellenbrecher-Riff (100), das Folgendes umfasst:
- Mindestens ein Böschungsfundament (104);
- Mindestens einen Grubenkieskern (102) auf dem Böschungsfundament (104) bestehend aus Kies und einem Geotextilsubstrat;
- Mehrere Natursteine (101) auf dem Grubenkieskern (102); und
- Mindestens eine künstliche Matrix (103), die sich mit den Natursteinschichten (101) abwechselt;
wobei die künstliche Matrix (103) eine Umhüllung aus einem durchlässigen und biologisch abbaubaren Material umfasst, die ein Mineralstoffgemisch enthält, das mindestens ein hydraulisches Bindemittel umfasst, das sich im Meerwasser schnell verfestigt. Hierbei ist das Mineralstoffgemisch mit Farbstoffen versetzt, und es enthält anorganischen Feststoffabfälle, die als ungiftig eingestuft sind.

2. Künstliches Wellenbrecher-Riff (100) gemäß Anspruch 1, wobei das Mineralstoffgemisch aus Sand, Kies und Steinen besteht.

3. Künstliches Wellenbrecher-Riff (100) gemäß Anspruch 1, wobei es sich beim Geotextilsubstrat um ein dreidimensionales Netz in einem wasserdurchlässigen Vliesmaterial handelt.

4. Eine Methode für das Herstellen des künstlichen Wellenbrecher-Riffs (100) gemäß Anspruch 1, die folgende Schritte umfasst:
- Errichten eines Böschungsfundaments;
- Anbringen eines Grubenkieskerns auf dem Böschungsfundament;
- Anbringen einer ersten Natursteinschicht auf dem Böschungsfundaments sowie auf dem Grubenkieskern;
- abwechselndes Anbringen von Naturstein- und künstlichen Matrixschichten, wobei die Zwischenräume gering gehalten werden, um eine im Wesentlichen trapezförmige Struktur mit den in der Entwurfsphase festgelegten Abmessungen zu erhalten.

## Revendications

1. Récif brise-lames artificiel (100) comprenant :
- au moins un banc de fondation (104) ;
- au moins un noyau tout-venant (102) placé sur le banc de fondation (104), comprenant du gravier et un substrat géotextile ;
- une pluralité de pierres naturelles (101) placées sur le noyau tout-venant (102) ; et
- au moins une matrice artificielle (103) alternée avec des couches de pierres naturelles (101) ;
dans lequel la matrice artificielle (103) comprend une enveloppe constituée d'une matière perméable et biodégradable, contenant un mélange d'agrégation comprenant au moins un liant hydraulique, conçu pour se solidifier rapidement dans l'eau de mer, **caractérisé en ce que** le mélange d'agrégation est ajouté avec des colorants, et comprend des déchets solides inorganiques classés non toxiques.

2. Récif brise-lames artificiel (100) selon la revendication 1, **caractérisé en ce que** l'agrégat comprend du sable, du gravier et des pierres.

3. Récif brise-lames artificiel (100) selon la revendication 1, **caractérisé en ce que** le substrat géotextile est un filet tridimensionnel dans un tissu non tissé perméable à l'eau.

4. Procédé de fabrication du récif brise-lames artificiel (100) selon la revendication 1, **caractérisé en ce que** ledit procédé comprend les étapes suivantes :
- la réalisation d'un banc de fondation ;
- le placement d'un noyau tout-venant sur le banc de fondation ;
- le placement d'une première couche de pierres naturelles sur le banc de fondation et sur le noyau du tout-venant ;
- l'alternance de chaque couche de pierres naturelles avec une couche de matrice artificielle minimisant les espaces vides, pour former une structure sensiblement trapézoïdale de dimensions spécifiées lors de la phase de conception.
